# EUROPEAN PATENT APPLICATION

(11) **EP 3 674 203 A1**
(43) Date of publication of application: **01.07.2020**
(21) Application number: 19216410.1
(22) Date of filing: 16.12.2019
(51) Int. Cl.: B64C 3/18, B64C 3/26, B64C 3/28, B64C 5/00, B64C 9/22

(54) **AIRCRAFT FLOW BODY**

(30) Priority: 31.12.2018 GB 201821332
(71) Applicant: Airbus Operations GmbH, 21129 Hamburg (DE)
(72) Inventor: Bensmann, Stefan, 21129 Hamburg (DE)

(57) **Abstract**

An aircraft flow body comprising a rib bounded by and fixedly attached to an outer skin, wherein the outer skin and the rib are configured to plastically deform when the outer skin is subjected to an impact load in a leading edge region of the airflow body, wherein the stiffness of the outer skin is greater than or equal to the stiffness of the rib when deformed by the impact load.

## Description

### TECHNICAL FIELD

The present invention relates to an aircraft flow body and an aircraft comprising an aircraft flow body.

### BACKGROUND

The impact of one or more foreign bodies such as birds is a consideration during the design of aircraft flow bodies (wings, tails, nacelles etc.), which may be impacted by these bodies during their operational lifetime. It is a necessary consideration due to high impact energy that is imparted by the foreign object. The flow body structure needs to be damage tolerant and not fail to such an extent that it detaches from the aircraft. If the flow body also contains a liquid or gas tank, then the flow body should not suffer from a breach of containment.

Typically these criteria are satisfied by designing the skin and ribs so that a significant portion of the impact energy is absorbed until both rupture, where after, the remainder of the impact energy is absorbed by the spar, which may undergo plastic deformation but not rupture or be penetrated by the foreign object.

The result of such a design approach is a structure that meets damage tolerance and containment criteria but one that may also exhibit significant plastic deformation or damage after an impact event, to such an extent that it must be entirely replaced before returning to service. Repair or replacement of the spar in a flow body takes considerable effort and time to perform, and requires long term removal of the affected aircraft from service until the damage is repaired. This results in a repair process that is expensive for the aircraft operator.

In view of the above it can be considered that objects of the present invention are to provide an improved flow body design that can meet the damage tolerance and penetration criteria but also not require repair or replacement of the spar after an impact event. The object is solved by the features of the independent claims. Advantageous embodiments are subject matter of the dependent claims and the following description.

### SUMMARY OF THE INVENTION

An embodiment of the present invention provides an aircraft flow body 200 comprising a rib 201 bounded by and fixedly attached to an outer skin 203, wherein the outer skin 203 and the rib 201 are configured to plastically deform when the outer skin 203 is subjected to an impact load in a leading edge region 205 of the airflow body, wherein the stiffness of the outer skin 203 is greater than or equal to the stiffness of the rib 201 when deformed by the impact load L.

A design of a flow body 200 where the outer skin 203 and underlying rib 201 in the leading edge region 205 are configured to deform and absorb all of the impact load/energy is advantageous in that it enables an improved distribution of deformation between the rib 201 and outer skin 203 of the flow body 200 as a result of foreign object impact and therefore substantially reduces the amount of impact energy transferred to the spar 204, which lowers the likelihood of the spar 204 undergoing plastic deformation. Furthermore, a flow body 200 design where the rib 201 has the same or lower structural stiffness during impact than the outer skin 203 to which it is attached, results in a design where the rib 201 absorbs more of the impact load than the prior art. This allows the skin 203 to deform more and hence absorb more impact energy. Furthermore this reduces the likelihood of the outer skin 203 rupturing (tearing or being penetrated) before the impact load is absorbed, which may otherwise result in some foreign object debris directly impacting the spar 204 and plastically deforming it.

In a further embodiment of the present invention the aircraft flow body 200 further comprises a comprises a first rib portion 207 of the rib 201 and a second rib portion 209 of the rib 201, wherein the first rib portion 207 is attached to the outer skin 203 in the leading edge region 205, wherein the stiffness of the outer skin 203 is greater than or equal to the stiffness of the first rib portion 201 when deformed by the impact load L and, wherein the first rib portion 207 is attached to the second rib portion 209 by a lap joint 211.

A rib 201 with a first portion 207 configured to enable an improved distribution of impact load between the rib 201 and outer skin 203, coupled to a second rib portion 209 that may provide a separate structural function, for e.g., provide a stiffening of the spar 204) is advantageous as it results in a versatile design. Furthermore, in the event of an impact damage, the damaged first rib portion 207 may be disconnected/decoupled from an undamaged second rib portion 209, which may be attached to an undamaged spar 204. This results in a design that is less costly to repair after an impact damage as only a portion of the rib 201 may need replacement rather that the entire rib 201.

In another embodiment of the present invention, the aircraft flow body 200 comprises a lap joint 211 that is orientated substantially perpendicular to the direction of the impact load L. A joint 211 between the first and second rib portions 207 209 configured as such may result impact loads being transferred more uniformly across the full height (measured in Z direction) of the rib 201, which may be advantageous in that the likelihood of plastic deformation of the second rib portion 209 and the spar 204 may be further reduced.

In yet another embodiment of the present invention, the lap joint 211 comprises a single row of shear fasteners 213. Ajoint 211 between the first and second rib portions 207 209 provided with shear fasteners 213 configured to shear once the impact load L reaches a predetermined load may be advantageous in that as soon as the fasteners 213 fail, the reaction of the impact load will be isolated to the outer skin 203 and first rib portions 207, which may deform even further to react the impact loads.

In yet further embodiment of the present invention, the first rib portion 207 and second rib portion 209 are formed from dissimilar materials. Forming the rib portions 207 209 from dissimilar materials enables the rib portions to be refined for their specific structural function(s), which may reduce cost and weight of the flow body 200 as a whole.

Further advantages of the present invention will now become apparent from the detailed description with appropriate reference to the accompanying drawings.

### BRIEF DESCRIPTION OF THE DRAWINGS

Embodiments of the present invention presented herein are described below with reference to the following drawings, in which:
Figure 1 provides a schematic plan view of an aircraft comprising aircraft flow bodies according to embodiments of the present invention;
Figure 2 provides a pair of schematic cross-sectional views vertically through the line A-A of the aircraft flow body of Figure 1.

### DETAILED DESCRIPTION

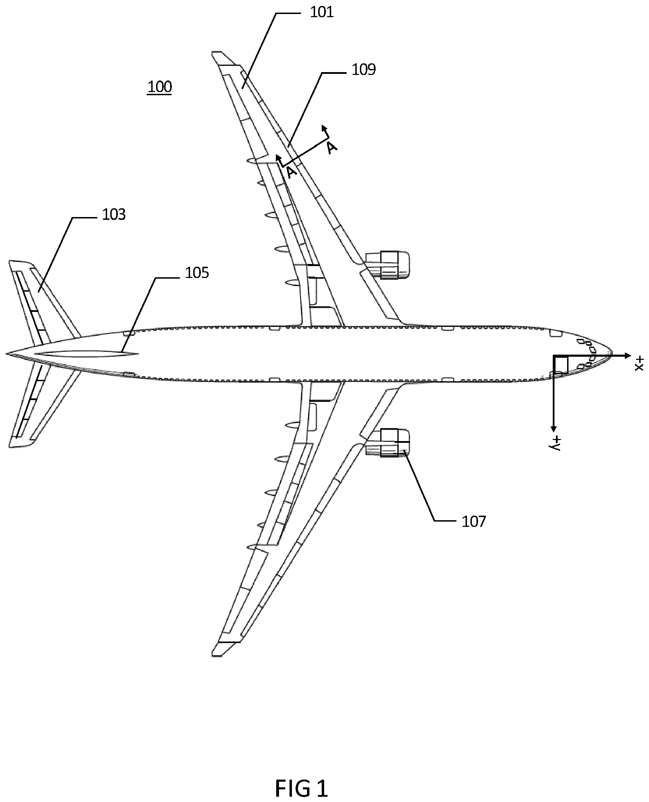

With reference to figures 1, an aircraft 100 is shown comprising a plurality of flow bodies such as the wing 101, horizontal tail 103, vertical tail 105, and engine nacelle 107. Each flow body comprises an internal structure consisting of an outer skin attached to underlying spars and/or ribs and/or stiffeners. The aircraft comprises a set of orthogonal aircraft axes, comprising a longitudinal X axis, a lateral (spanwise) Y axis, and a vertical Z axis. The region of each flow body existing in the most positive X direction is commonly referred to as the leading edge region of the flow body and is most susceptible to impact from foreign objects travelling in the -X direction. The wing 101 further comprises a plurality of smaller flow bodies in the form of slats 109, which are movably attached the forward (leading edge) region of the wing 101. These are constructed in substantially the same way as the larger structures in that they comprise an outer skin attached to underlying spars and/or ribs and/or stiffeners.

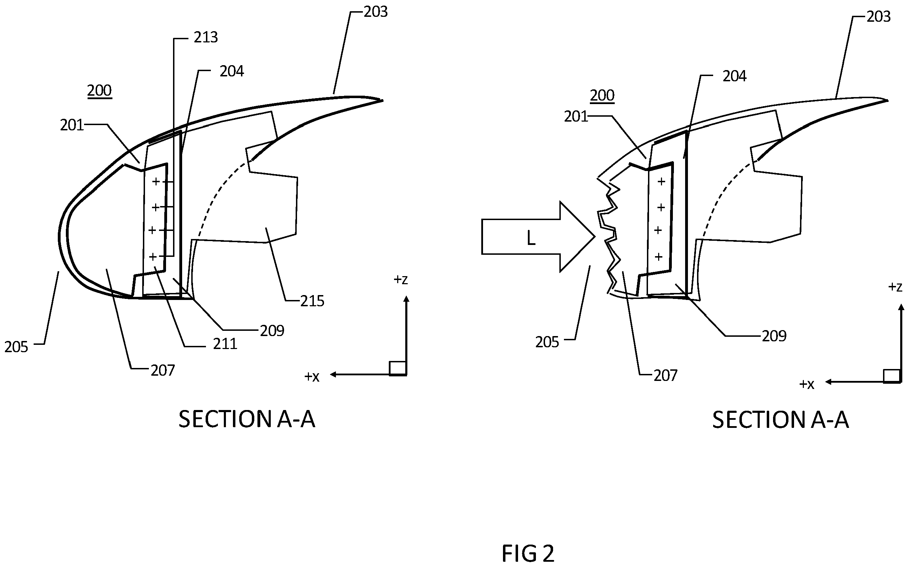

With reference to figures 2, a non-impacted flow body in the form of a slat 200 is shown on the left hand side.

The slat 200 comprises an outer skin 203 that bounds, and is fixedly attached to, a rib 201 and a spar 204 that lie internally within it. The outer skin 203 is formed from a thin sheet alloy aluminium material (e.g. 2024 series aluminium alloy material), but any suitable metallic or composite material may alternatively be used. The rib 201 comprises a first rib portion 207 attached by a lap joint 211 with a single row of fasteners 213 to a second rib portion 209. The first rib portion 207 is attached to the outer skin 203 in the leading edge region 205 by fasteners (not shown) and is formed from a thin sheet alloy aluminium material (e.g. 2024 series aluminium alloy material), but any suitable metallic or composite material may alternatively be used. The second rib portion 209 is attached to the spar 204 aft of the leading edge region 205 by fasteners (also not shown) and is formed from a thin sheet alloy aluminium material (e.g. 2024 series aluminium alloy material), but any suitable metallic or composite material may alternatively be used. The second rib portion 209 comprises a connection portion 215 that attaches to a slat kinematic system for moving the slat 200 in operation. The rib 201 is oriented substantially vertically in a plane lying parallel to the XZ plane. The spar 204 is oriented substantially vertically in a plane lying parallel to the YZ plane and is constructed from a sheet aluminium alloy material (e.g. or 7010 series or 2014 series aluminium alloy), but any suitable metallic or composite material may alternatively be used. During normal operation of the slat 200, the outer skin 203 is subjected to aerodynamic pressure loads, which are transferred via spar 204, the rib 201 and the kinematic system to the wing 101. The components in the slat 200 i.e. the skin 203, rib 201 and spar 204, are also subjected to inertial loads caused by accelerations of the aircraft 101 during take-off, cruise and landing. In response to this loading the components elastically deform and deflect within predetermined limits that are pre-determined by each component's load amount, sectional properties and material mechanical properties.

Referring to the right hand side of figure 2, the non-impacted flow body shown on the left hand side is also shown in an impacted and plastically deformed scenario, where an impact load L acts against the leading edge region 205 of the slat 200 in a -X direction.

The stiffness of the outer skin 203 is equal to the stiffness of the first rib portion 207 at the location where impact load L exerts itself on the structure, such that the skin 203 and first rib portion 207 deform uniformly in reaction to the impact load L, as shown. The impact kinetic energy is absorbed by slat 200 through deformation of the skin 203 and the first rib portion 207, and not by the second rib portion 209 and spar 204, which remain only elastically deformed in response to the impact load. In the example shown, the lap joint 211 is not sheared, however for an impact of a higher impact energy, the lap joint 211 is configured to shear at a predetermined load level, which redistributes the load back to the skin 203, which may deform further.

The stiffness of the first rib portion 207 may be tailored by changing the sectional properties of the first rib portion 207 or by choosing a material for the first rib portion 207 that has a lower mechanical stiffness in the direction of the applied loading or both. Where less deformation of the skin 203 is desired, for example to prevent rupture of the skin 203 e.g. adjacent to the attachment interface with rib 201, the stiffness of the first rib portion 207 may be reduced to a value less than the stiffness of the skin 203 but sufficient to support the loading otherwise experienced during normal operation. Similarly where more deformation of the skin 203 is desired, the stiffness of the first rib portion 207 may alternatively be increased to a value higher than the stiffness of the skin 203 but sufficient to support the loading experienced during normal operation.

While at least one exemplary embodiment of the present invention(s) is disclosed herein, it should be understood that modifications, substitutions and alternatives may be apparent to one of ordinary skill in the art and can be made without departing from the scope of this disclosure. For example, it should be appreciated that the rib 201 may be a unitary component with the required stiffness, rather than a rib 201 with separate portions. The rib 201 may further be attached to only the skin 203 or additional structural components than the skin 203 or spar 204. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise. This disclosure hereby incorporates by reference the complete disclosure of any patent or application from which it claims benefit or priority.

## Claims

1. A aircraft flow body comprising:
a rib bounded by and fixedly attached to an outer skin;
wherein the outer skin and the rib are configured to plastically deform when the outer skin is subjected to an impact load in a leading edge region of the flow body;
wherein the stiffness of the outer skin is greater than or equal to the stiffness of the rib when deformed by the impact load L.

2. An aircraft flow body according to claim 1 wherein the rib comprises a first rib portion and a second rib portion; wherein the first rib portion is attached to the outer skin in the leading edge region; wherein the stiffness of the outer skin is greater than or equal to the stiffness of the first rib portion when deformed by the impact load; and, wherein the first rib portion is attached to the second rib portion by a lap joint;

3. An aircraft flow body according to any preceding claim wherein the lap joint is orientated substantially perpendicular to the direction of the impact load.

4. An aircraft flow body according to any preceding claim wherein the lap joint comprises a single row of shear fasteners.

5. An aircraft flow body according to any preceding claim wherein the first rib portion and second rib portion are formed from dissimilar materials.

6. An aircraft comprising an aircraft flow body according to any preceding claim.
